# EUROPÄISCHE PATENTANMELDUNG

(11) **EP 3 950 216 A1**
(43) Veröffentlichungstag der Anmeldung: **09.02.2022**
(21) Anmeldenummer: 20189229.6
(22) Anmeldetag: 03.08.2020
(51) Int. Cl.: B23Q 1/26, B23Q 1/54, B23Q 3/18, B23Q 5/40

(54) **AUSRICHTUNGSVORRICHTUNG ZUM AUSRICHTEN EINES LÄNGLICHEN ELEMENTS IN EINER WERKZEUGMASCHINE**

(71) Anmelder: Atelier Sedlacek, 2540 Grenchen (CH)
(72) Erfinder: SEDLACEK, Libor, 2540 Grenchen (CH); SEDLACEK, Andreas, 2540 Grenchen (CH)
(74) Vertreter: EGLI-EUROPEAN PATENT ATTORNEYS

(57) **Zusammenfassung**

Eine Ausrichtungsvorrichtung dient zum Ausrichten eines länglichen Elements (4, 4') in einer Werkzeugmaschine (20, 20'), die zumindest eine Referenzebene (7a, 7a') aufweist und wobei sich das längliche Element (4, 4') im Wesentlichen entlang einer Längsachse (L) erstreckt. Die Ausrichtungsvorrichtung (13, 13', 14) umfasst einen Befestigungsabschnitt (16) zum Anbringen der Ausrichtungsvorrichtung (13, 13', 14) an der Werkzeugmaschine (20, 20') und ein Exzenterelement (2), das um eine Exzenterachse drehbar ist und an dem das längliche Element (4, 4') vorgesehen ist, um das längliche Element in der Werkzeugmaschine zu halten, wobei zumindest in einer Ebene des Exzenterelements (2), die senkrecht zur Exzenterachse verläuft, die Längsachse (L) des länglichen Elements (4, 4') von der Exzenterachse beabstandet ist, sodass eine Drehbewegung (III) des Exzenterelements um die Exzenterachse eine Bewegung des länglichen Elements in einer Einstellrichtung, die quer zur Längsachse (L) ist, bewirkt.

## Beschreibung

### Technisches Gebiet

Die vorliegende Anmeldung betrifft eine Ausrichtungsvorrichtung zum Ausrichten eines länglichen Elements in einer Werkzeugmaschine, sowie eine Werkzeugmaschine mit einer derartigen Ausrichtungsvorrichtung und ein Verfahren zum Ausrichten eines länglichen Elements in einer Werkzeugmaschine.

### Stand der Technik

Eine Werkzeugmaschine dient zur Bearbeitung oder Fertigung eines oder mehrerer Werkstücke mit Werkzeugen. Die Werkzeugmaschine legt dabei eine Positionierung und relative Bewegung des Werkstücks und des Werkzeugs zueinander fest. In der Regel ist eine Werkzeugmaschine modular aufgebaut, d. h. aus einzelnen Baugruppen und Elementen zusammengesetzt. Derartige Baugruppen sind z.B. eine Basis oder Gestell, ein Antrieb, eine Führung, eine Steuerung etc. Dabei ist eine präzise Montage der Werkzeugmaschine, d. h. die Positionierung und Ausrichtung der einzelnen Baugruppen bzw. Elemente zueinander, erforderlich, um im Betrieb der Werkzeugmaschine eine möglichst exakte Fertigung oder Bearbeitung des Werkstücks zu erzielen. Die Genauigkeit der Ausrichtung und Positionierung der Baugruppen und Elemente bei der Montage einer Werkzeugmaschine wird zudem von Fertigungstoleranzen der einzelnen Baugruppen und Elemente beeinflusst.

Insbesondere eine Ausrichtung eines länglich ausgebildeten Elements, das eine Längsachse aufweist, die z.B. parallel zu einer Basis der Werkzeugmaschine auszurichten ist, ist sehr aufwändig. Ein derartiges länglich ausgebildetes Element kann beispielsweise eine Welle, (Antriebs-)Achse, Führung o.ä. der Werkzeugmaschine sein. Es ist bekannt für eine Höheneinstellung eines solchen länglichen Elements beispielsweise dünne Plättchen an den Auflagen zu unterlegen oder die Auflagen werden geschliffen, was die Höheneinstellung sehr aufwändig gestalten kann und/oder grosse Fehler und eine schlechte Reproduzierbarkeit der Höheneinstellung bewirken kann. Zudem kann dieses Vorgehen eine Demontage und anschliessende Remontage der Werkzeugmaschine bzw. Teile derselben erforderlich machen.

DE 10 2012 111 548 A1 beschreibt eine Vorrichtung zum Positionieren eines rohrförmigen Werkstücks auf einem Halter einer Werkzeugmaschine. Das Werkstück wird dabei auf einen Aufnahmedorn einer zweiteiligen Werkstückaufnahme aufgesetzt und durch entsprechende Justageeinrichtungen ausgerichtet.

### Zusammenfassung der Erfindung

Die Aufgabe der vorliegenden Erfindung besteht darin, eine alternative bzw. verbesserte Ausrichtungsvorrichtung und ein alternatives bzw. verbessertes Verfahren zum Ausrichten eines länglichen Elements in einer Werkzeugmaschine bereitzustellen, mit der bzw. dem insbesondere eine einfachere, verbesserte und möglichst reproduzierbare Ausrichtung eines länglichen Element, wie z.B. einer Achse, Welle, Führung oder eines Antriebs, in der Werkzeugmaschine möglich ist und/oder mit der bzw. dem ein Fertigungsaufwand der angrenzenden Bauteile minimieren und die Montagezeit der Bauteile verkürzt werden kann.

Diese Aufgabe wird gelöst durch eine Ausrichtungsvorrichtung gemäss Anspruch 1, eine Werkzeugmaschine gemäss Anspruch 8 und ein Verfahren gemäss Anspruch 11. Weiterbildungen der Erfindung sind jeweils in den Unteransprüchen angegeben. Dabei kann das Verfahren auch durch die untenstehenden bzw. in den Unteransprüchen ausgeführten Merkmale der Ausrichtungsvorrichtung und der Werkzeugmaschine weitergebildet sein oder umgekehrt, bzw. die Merkmale der Ausrichtungsvorrichtung und der Werkzeugmaschine können auch jeweils untereinander zur Weiterbildung genutzt werden.

Eine erfindungsgemässe Ausrichtungsvorrichtung dient zum Ausrichten eines länglichen Elements in einer Werkzeugmaschine, wobei die Werkzeugmaschine zumindest eine Referenzebene aufweist, und wobei sich das längliche Element im Wesentlichen entlang einer Längsachse erstreckt. Die Ausrichtungsvorrichtung umfasst einen Befestigungsabschnitt zum Anbringen der Ausrichtungsvorrichtung an der Werkzeugmaschine und ein Exzenterelement, das um eine Exzenterachse drehbar ist und an dem das längliche Element vorgesehen ist, um das längliche Element in der Werkzeugmaschine zu halten, wobei zumindest in einer Ebene des Exzenterelements, die senkrecht zur Exzenterachse verläuft, die Längsachse des länglichen Elements von der Exzenterachse beabstandet ist, sodass eine Drehbewegung des Exzenterelements um die Exzenterachse eine Bewegung des länglichen Elements in einer Einstellrichtung, die quer zur Längsachse ist, bewirkt.

Eine Referenzebene der Werkzeugmaschine ist vorzugsweise eine vorab festgelegte Ebene, zu der die Längsachse des länglichen Elements im Wesentlichen parallel auszurichten ist. Beispielsweise kann die Referenzebene durch eine oder mehrere Flächen oder Referenzpunkte der Werkzeugmaschine oder einzelner Bauteile derselben definiert sein. Die Referenzebene kann auch eine virtuelle Ebene der Werkzeugmaschine sein.

Im Rahmen der vorliegenden Anmeldung meint der Begriff "Im Wesentlichen" in Bezug auf eine Ausrichtung oder Einstellung, dass eine gewünschte Position bzw. ein gewünschter Wert nicht zwingend exakt eingestellt wird oder ist, sondern im Rahmen einer vorab festgelegten Toleranz (z.B. ± 10% oder ± 5%) eingestellt wird oder ist. Auch in Bezug auf eine Erstreckung oder Abmessung schliesst der Begriff "im Wesentlichen" eine vorab festgelegte Toleranz mit ein.

Das längliche Element ist vorzugsweise ein Element der Werkzeugmaschine selbst. Somit handelt es sich bei dem länglichen Element vorzugsweise nicht um ein mit der Werkzeugmaschine zu bearbeitendes Werkstück.

Da die Ausrichtungsvorrichtung dazu dient, das längliche Element sowohl in der Werkzeugmaschine zu halten, als auch ein Ausrichten des länglichen Elements in der Werkzeugmaschine zu bewirken, entfällt beispielsweise die Notwendigkeit, separat von der Werkzeugmaschine vorgesehene Einstell- oder Ausrichtungsmittel, z.B. die oben beschriebenen Montageplättchen, bereitzustellen. Auch kann damit beispielsweise ein Fertigungsaufwand an das längliche Element angrenzender Bauteile minimiert werden und die Montagezeit der Bauteile verkürzt werden. Zudem kann eine etwaige Demontage und nachfolgende Remontage des Systems bei Verwendung der erfindungsgemässen Ausrichtungsvorrichtung entfallen. Insgesamt kann dies die Ausgestaltung und die Montage der Werkzeugmaschine beispielsweise vereinfachen und/oder kostengünstiger gestalten, insbesondere bei einer erhöhten Genauigkeit der Ausrichtung des länglichen Elements in der Werkzeugmaschine.

Vorzugsweise ist das längliche Element eine Achse oder eine Welle oder eine Führung oder ein Antrieb der Werkzeugmaschine. Damit sind beispielsweise unterschiedliche längliche Elemente bereitgestellt, deren Ausrichtung in der Werkzeugmaschine mittels der Ausrichtungsvorrichtung ermöglicht werden kann.

Vorzugsweise bewirkt die Drehbewegung des Exzenterelements um die Exzenterachse eine Bewegung des länglichen Elements in eine Richtung senkrecht zur Referenzebene der Werkzeugmaschine. Damit ist es beispielsweise möglich, einen Abstand des länglichen Elements in Bezug auf die Referenzebene durch Drehen des Exzenterelements einzustellen, d.h. eine Höhen- und Winkeleinstellung des länglichen Elements vorzunehmen.

Vorzugsweise ist der Befestigungsabschnitt der Ausrichtungsvorrichtung dazu ausgebildet, eine relative Bewegung der Ausrichtungsvorrichtung zur Werkzeugmaschine in eine Richtung parallel zur Referenzebene zu erlauben, und eine relative Bewegung der Ausrichtungsvorrichtung zur Werkzeugmaschine senkrecht zur Referenzebene zu verhindern. Damit kann beispielsweise eine Höheneinstellung des länglichen Elements, d. h. das Einstellen eines Abstands des länglichen Elements zur Referenzebene, vereinfacht werden, da der Befestigungsabschnitt eine Bewegung der Ausrichtungsvorrichtung selbst in der Einstellrichtung verhindert. Vorzugsweise ist das Exzenterelement der Ausrichtungsvorrichtung als eine Exzenterscheibe ausgebildet, wobei die Exzenterscheibe eine Durchführöffnung aufweist zur Befestigung des länglichen Elements an der Exzenterscheibe. Damit kann beispielsweise eine auf einfache Art und Weise realisierbare Ausrichtung bzw. Höheneinstellung des länglichen Elements ermöglicht werden.

Vorzugsweise umfasst das Exzenterelement der Ausrichtungsvorrichtung ein Lager, das eine Bewegung des länglichen Elements relativ zum Exzenterelement erlaubt. Diese Relativbewegung kann insbesondere eine Translationsbewegung des länglichen Elements entlang der Längsrichtung sein und/oder eine Drehbewegung des länglichen Elements um die Längsachse. Somit kann beispielsweise eine Bewegung des länglichen Elements in ein oder zwei Freiheitsgraden ermöglicht werden, was eine grosse Vielzahl an möglichen Funktionen und Ausgestaltungen des länglichen Elements ermöglichen kann. Das längliche Element kann auch starr sein, in diesem Fall hat die Anschlussumgebung diese Freiheitsgrade.

Vorzugsweise umfasst die Ausrichtungsvorrichtung weiter eine Klemm- oder Rasteinrichtung, um eine Rotationsstellung des Exzenterelements um die Exzenterachse zu fixieren oder eine Drehung des Exzenterelements um die Exzenterachse freizugeben. Damit ist es beispielsweise möglich, eine Drehung des Exzenterelements zum Zweck der Ausrichtung des länglichen Elements freizugeben und anschliessend die Rotationsstellung des Exzenterelements und somit des länglichen Elements in der Werkzeugmaschine zu fixieren, wenn eine gewünschte Ausrichtung des länglichen Elements erreicht ist. Insbesondere ist es bevorzugt, das Exzenterelement nach einer Ausrichtung des länglichen Elements, insbesondere im Betrieb der Werkzeugmaschine, durch die Klemm- oder Rasteinrichtung zu fixieren.

Eine erfindungsgemässe Werkzeugmaschine umfasst eine Referenzebene und ein längliches Element, das sich im Wesentlichen entlang einer Längsachse erstreckt, und zumindest eine oben beschriebene Ausrichtungsvorrichtung. Damit ist es beispielsweise möglich, die oben in Bezug auf die erfindungsgemässe Ausrichtungsvorrichtung beschriebenen Wirkungen in einer Werkzeugmaschine zu erzielen.

Vorzugsweise hält die Ausrichtungsvorrichtung das längliche Element in der Werkzeugmaschine an einer ersten Stelle in Bezug auf die Längsachse des länglichen Elements und die Werkzeugmaschine umfasst weiter eine Halterung oder eine weitere oben beschriebene Ausrichtungsvorrichtung, wobei die Halterung oder die weitere Ausrichtungsvorrichtung das längliche Element an einer zweiten Stelle in Bezug auf die Längsachse des länglichen Elements in der Werkzeugmaschine hält, wobei die erste Stelle und die zweite Stelle entlang der Längsachse voneinander beabstandet sind. Alternativ oder zusätzlich ist zumindest eine Ausrichtungsvorrichtung an einem Endabschnitt oder einem Mittelabschnitt des länglichen Elements in Bezug auf die Längsachse des länglichen Elements vorgesehen. Damit wird beispielsweise eine einfach durchzuführende Ausrichtung des länglichen Elements in der Werkzeugmaschine ermöglicht.

Ein erfindungsgemässes Verfahren dient zum Ausrichten eines länglichen Elements in einer Werkzeugmaschine mittels mindestens einer oben beschriebenen Ausrichtungsvorrichtung, wobei die Werkzeugmaschine zumindest eine Referenzebene aufweist und ein längliches Element umfasst, welches sich im Wesentlichen entlang einer Längsachse erstreckt. Vorzugsweise wird in dem Verfahren das Exzenterelement der mindestens einen Ausrichtungsvorrichtung derart um die Exzenterachse gedreht, dass die Längsachse des länglichen Elements im Wesentlichen parallel zur Referenzebene ausgerichtet wird. Alternativ oder zusätzlich wird in dem Verfahren vorzugsweise die Ausrichtungsvorrichtung parallel zur Referenzebene bewegt, um die Längsachse des länglichen Elements im Wesentlichen parallel zu einer Referenzgeraden der Werkzeugmaschine auszurichten. Die Referenzgerade ist vorzugsweise parallel zur Referenzebene und erstreckt sich in eine vorab festgelegte und/oder in der Werkzeugmaschine durch geeignete Referenzpunkte definierte Richtung, entlang der die Längsachse des länglichen Elements im Wesentlichen auszurichten ist. Das erfindungsgemässe Verfahren erlaubt beispielsweise ein auf einfache Art und Weise durchführbares und möglichst reproduzierbares Ausrichten des länglichen Elements in der Werkzeugmaschine.

Vorzugsweise wird das Verfahren durchgeführt, bevor die Werkzeugmaschine in Betrieb genommen wird und/oder während einer Betriebsunterbrechung der Werkzeugmaschine.

### Kurze Beschreibung der Zeichnungen

Weitere Merkmale und Zweckmässigkeiten der Erfindung ergeben sich aus der Beschreibung von Ausführungsbeispielen anhand der beigefügten Zeichnungen.
Fig. 1 zeigt eine schematische und teilweise im Schnitt dargestellte Ansicht einer Werkzeugmaschine gemäss einer ersten Ausführungsform der vorliegenden Erfindung.
Fig. 2 zeigt eine schematische Ansicht der in Fig. 1 gezeigten Werkzeugmaschine im Schnitt entlang der Linie D-D in Fig. 1.
Fig. 3 zeigt eine schematische Ansicht der in Fig. 1 gezeigten Werkzeugmaschine im Schnitt entlang der Linie C-C in Fig. 1.
Fig. 4a zeigt eine schematische und teilweise im Schnitt dargestellte Ansicht der in Fig. 1 gezeigten Werkzeugmaschine gemäss einer ersten Weiterbildung.
Fig. 4b zeigt eine schematische und teilweise im Schnitt dargestellte Ansicht der in Fig. 1 gezeigten Werkzeugmaschine gemäss einer zweiten Weiterbildung.
Fig. 4c zeigt eine schematische und teilweise im Schnitt dargestellte Ansicht der in Fig. 1 gezeigten Werkzeugmaschine gemäss einer dritten Weiterbildung.
Fig. 4d zeigt eine schematische und teilweise im Schnitt dargestellte Ansicht der in Fig. 1 gezeigten Werkzeugmaschine gemäss einer vierten Weiterbildung.
Fig. 4e zeigt eine schematische und teilweise im Schnitt dargestellte Ansicht der in Fig. 1 gezeigten Werkzeugmaschine gemäss einer fünften Weiterbildung.
Fig. 5a zeigt eine schematische und teilweise im Schnitt dargestellte Ansicht einer Werkzeugmaschine gemäss einer zweiten Ausführungsform der vorliegenden Erfindung.
Fig. 5b zeigt eine schematische und teilweise im Schnitt dargestellte Ansicht einer ersten Weiterbildung der in Fig. 5a gezeigten Werkzeugmaschine.
Fig. 5c zeigt eine schematische und teilweise im Schnitt dargestellte Ansicht einer zweiten Weiterbildung der in Fig. 5a gezeigten Werkzeugmaschine.

### Beschreibung von Ausführungsformen

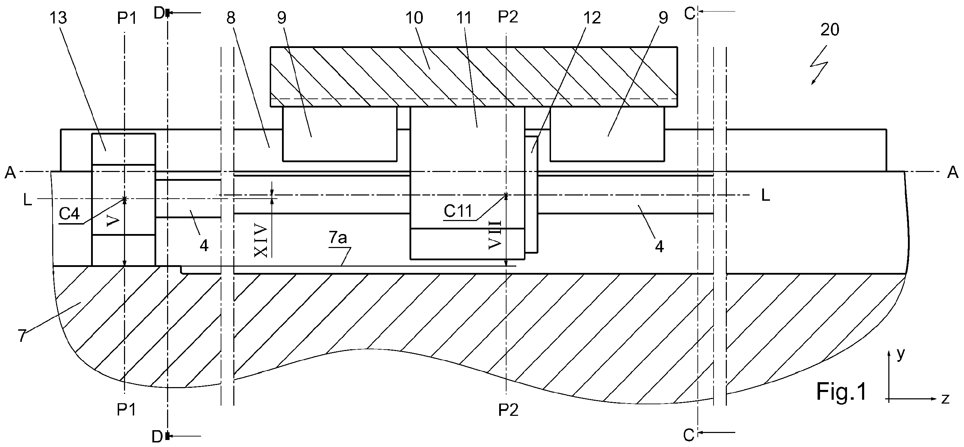

Im Folgenden wird mit Bezug auf Fig. 1 bis 3 eine Werkzeugmaschine gemäss einer ersten Ausführungsform der vorliegenden Erfindung beschrieben. Die Werkzeugmaschine 20 dient zur Bearbeitung eines oder mehrerer in den Figuren nicht gezeigter Werkstücke. Sie weist ein Basisbauteil 7 auf, das beispielsweise als ein Maschinenbett, ein Maschinentisch, ein Maschinenrahmen oder eine Grundplatte ausgebildet ist. Das Basisbauteil 7 weist eine Basisfläche 7a auf, die in vorliegender Ausführungsform als eine Referenzebene dient und in den Figuren eine nach oben weisende Oberseite des Basisbauteils 7 ist. Weiter weist die Werkzeugmaschine 20 ein längliches Element 4 auf, welches sich im Wesentlichen in eine Längsrichtung erstreckt und eine Längsachse L entlang der Längsrichtung aufweist. In der vorliegenden Ausführungsform ist das längliche Element 4 im Wesentlichen zylindrisch ausgebildet, d.h. es weist quer zur Längsachse L einen im Wesentlichen runden Querschnitt auf. Eine Querschnittsfläche des länglichen Elements 4 kann entlang der Längsachse L über dessen Länge konstant sein oder entlang der Längsachse L variieren.

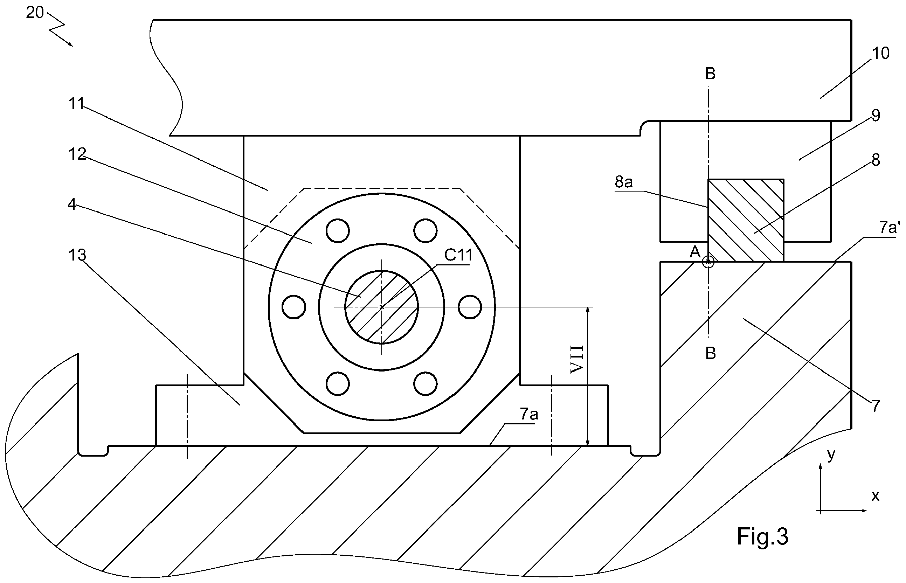

Wie am besten aus Fig. 1 und 3 ersichtlich, weist die Werkzeugmaschine 20 weiter eine Führung 8, beispielsweise eine als eine Führungsschiene ausgebildete Linearführung, auf, die an dem Basisbauteil 7 angebracht und fest mit diesem verbunden ist. An der Führung 8 ist ein oder mehrere Führungsschlitten 9 angebracht, der relativ zur Führung 8 bewegbar an dieser vorgesehen ist. Weiter weist die Werkzeugmaschine 20 ein als eine Platte 10 ausgebildetes Trägerelement auf, das an dem Führungsschlitten 9 angebracht ist und somit mit diesem entlang der Führung 8 bewegbar ist. Die Platte 10 ist in Fig. 1-3 in einem Abstand zum Basisbauteil 7 vorgesehen und das längliche Element 4 ist zwischen dem Basisbauteil 7 und der Platte 10 angeordnet.

Eine Referenzgerade A der Werkzeugmaschine 20 erstreckt sich im Wesentlichen parallel zur Basisfläche 7a des Basisbauteils 7. In der vorliegenden Ausführungsform liegt die Referenzgerade A in einer Ebene einer Grenzfläche 7a' des Basisbauteils 7, an der die Führung 8 angebracht ist (s. Fig. 3). In Fig. 3 ist die Referenzgerade A durch einen Kreis mit einem Kreuz dargestellt. Die Referenzgerade A gibt die Richtung an, zu der die Längsachse L des länglichen Elements 4 in der Werkzeugmaschine 20 im Wesentlichen parallel auszurichten ist. In der vorliegenden Ausführungsform erstreckt sich die Referenzgerade A in die Richtung, in der eine Translationsbewegung der Platte 10 durch die Führung 8 ermöglicht wird (s. Fig. 1). Senkrecht zur Basisfläche 7a bzw. zur Grenzfläche 7a' des Basisbauteils 7 erstreckt sich eine Bezugsgerade B (s. Fig. 3), deren Erstreckungsrichtung auch als Einstellrichtung bezeichnet wird. Die Bezugsgerade B verläuft in Fig. 3 durch eine Ebene einer Seitenfläche 8a der Führung 8. Beispielsweise kann die Basisfläche 7a bzw. die Grenzfläche 7a' eine horizontale Ebene sein und die Bezugsgerade B erstreckt sich in der vertikalen Richtung.

In einem kartesischen Bezugskoordinatensystem der Werkzeugmaschine 20 definiert die Referenzgerade A eine z-Achse und die Bezugsgerade B definiert eine y-Achse (s. Fig. 1, 3). Senkrecht zur y-Achse und zur z-Achse (d.h. senkrecht zur Bezugsgeraden B und zur Referenzgeraden A) erstreckt sich die x-Achse des Bezugskoordinatensystems. Die Basisfläche 7a des Basisbauteils 7 liegt in der x-z-Ebene.

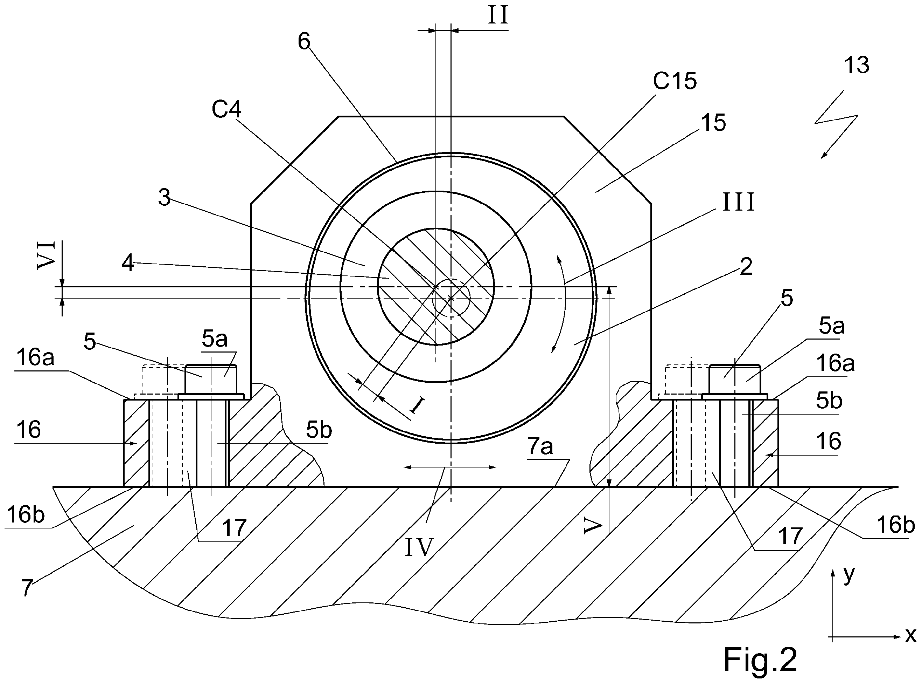

Das längliche Element 4 wird in der Werkzeugmaschine an einer ersten Stelle P1 in Bezug auf die Längsachse L durch eine Ausrichtungsvorrichtung 13 gehalten, welche weiter unten in Bezug auf Fig. 2 näher beschrieben wird. An einer zweiten Stelle P2 in Bezug auf die Längsachse L wird das längliche Element 4 in der Werkzeugmaschine 20 durch eine Halterung 11 gehalten. Die erste Stelle P1 und die zweite Stelle P2 sind entlang der Längsachse L voneinander beabstandet. In Fig. 1 ist die erste Stelle P1 an einem Endabschnitt des länglichen Elements 4 in Bezug auf die Längsachse L vorgesehen und die zweite Stelle P2 an einem Mittelabschnitt des länglichen Elements 4 in Bezug auf die Längsachse L. Das längliche Element 4 weist an der ersten Stelle P1 einen Mittelpunkt C4 (s. Fig. 1, 2) und an der zweiten Stelle P2 einen Mittelpunkt C11 (s. Fig. 1, 3) auf, wobei die Mittelpunkte C4, C11 auf der Längsachse L liegen.

Die Halterung 11 ist fest mit dem als Platte 10 ausgebildeten Trägerelement verbunden, d.h. nicht relativ zur Platte 10 bewegbar. Beispielsweise kann die Halterung 11 integral mit der Platte 10 ausgebildet sein. Wie am besten aus Fig. 3 ersichtlich, weist die Halterung 11 einen Mitnehmer 12 auf, der zur Aufnahme des länglichen Elements 4 ausgebildet ist.

Das längliche Element 4 und der Mitnehmer 12 können je nach Ausgestaltung und Funktion der Werkzeugmaschine 20 verschieden ausgebildet sein. Allgemein können das längliche Element 4 und der Mitnehmer 12 in Bezug auf das Bezugskoordinatensystem (x-, y-, und z-Achsen, s.o.) oder in Bezug aufeinander fest, d.h. nicht bewegbar, ausgebildet sein oder sie können bewegbar ausgebildet sein.

Beispielsweise kann das längliche Element 4 in der Funktion eines rotierenden Antriebs als eine Spindel ausgebildet sein, wobei eine Antriebskraft (z.B. eines in den Figuren nicht gezeigten Motors) mittels der Spindel eingeleitet und durch den als eine Mutter ausgebildeten Mitnehmer 12 aufgenommen wird, um eine Relativbewegung zwischen dem als Platte 10 ausgebildeten Trägerelement und dem Basisbauteil 7 zu bewirken. Vorzugsweise sind die Spindel als längliches Element 4 und die Mutter als Mitnehmer 12 dabei als eine rotierende Kugelgewindespindel ausgebildet.

Alternativ kann beispielsweise das längliche Element 4 in der Funktion eines stehenden Antriebs, vorzugsweise einer stehenden Kugelgewindespindel, als fixierte, d. g. nicht drehbar gelagerte Spindel ausgebildet sein, wobei eine Antriebskraft durch den als eine drehbare Antriebsmutter ausgebildeten Mitnehmer 12 eingeleitet und durch die Spindel (längliches Element 4) aufgenommen wird, um eine Relativbewegung zwischen dem als Platte 10 ausgebildeten Trägerelement und dem Basisbauteil 7 zu bewirken.

Alternativ kann das längliche Element 4 beispielsweise als eine Stange ausgebildet sein, wobei eine Relativbewegung zwischen dem als Platte 10 ausgebildeten Trägerelement und dem Basisbauteil 7 durch weitere, in den Figuren nicht gezeigte Elemente bewirkt wird. Der Mitnehmer 12 kann beispielsweise als eine Bremse ausgebildet sein, wobei eine durch den als Bremse ausgebildeten Mitnehmer 12 bewirkte Bremskraft durch das als Stange ausgebildete längliche Element 4 aufgenommen wird, beispielsweise um die Relativbewegung zwischen der Platte 10 und dem Basisbauteil 7 zu bremsen. Auch kann das längliche Element 4 als eine Dämpfungsstange ausgebildet sein, um die Relativbewegung zwischen der Platte 10 und dem Basisbauteil 7 zu dämpfen.

Alternativ kann beispielsweise das längliche Element 4 als eine Stange für eine Führung des als Platte 10 ausgebildeten Trägerelements oder eines weiteren Elements der Werkzeugmaschine 20 (in den Figuren nicht gezeigt) ausgebildet sein und der Mitnehmer 12 als ein Führungswagen oder als Lagerung, an dem die Platte 10 direkt oder ein weiteres, in den Figuren nicht gezeigtes Element angebracht ist. Eine derartige Führung durch ein als Stange ausgebildetes längliches Element 4 kann zusätzlich oder alternativ zu der oben beschriebenen Führung 8 vorgesehen sein.

Wie am besten aus Fig. 2 ersichtlich, weist die Ausrichtungsvorrichtung 13 der Werkzeugmaschine 20 ein Gehäuse 15 mit zwei Befestigungsabschnitten 16 auf, mittels denen die Ausrichtungsvorrichtung 13 an dem Basisbauteil 7 der Werkzeugmaschine 20 angebracht ist, sowie ein als eine Exzenterscheibe 2 ausgebildetes Exzenterelement im Inneren des Gehäuses 15.

Die zwei Befestigungsabschnitte 16 sind in Fig. 2 in x-Richtung voneinander beabstandet auf gegenüberliegenden Seiten der Exzenterscheibe 2 vorgesehen. Jeder Befestigungsabschnitt 16 weist eine den Befestigungsabschnitt 16 von einer Oberseite 16a zu einer Unterseite 16b durchdringende Bohrung 17 auf, durch die ein in dem Basisbauteil 7 verankertes, z.B. verschraubtes, Befestigungselement, in Fig. 2 eine Schraube 5 mit einem Schraubenkopf 5a und einem Schaft 5b, hindurchgeführt ist. Die Verankerung des Befestigungselements in dem Basisbauteil ist vorzugsweise lösbar ausgebildet. Die Bohrung 17 weist in der x-Richtung eine grössere Erstreckung auf als eine Erstreckung des Schraubenschafts 5b in der x-Richtung, um eine Bewegung der Ausrichtungsvorrichtung 13 relativ zum Basisbauteil 7 bzw. zur Werkzeugmaschine 20 in x-Richtung (also senkrecht zur Referenzgeraden A und senkrecht zur Bezugsgeraden B) zu erlauben (in Fig. 2 durch einen Doppelpfeil IV angedeutet), wenn die Schraube 5 nicht vollständig eingeschraubt ist. In Fig. 2 ist die Ausrichtungsvorrichtung in einer linken Endposition in x-Richtung dargestellt und somit in Fig. 2 nach rechts (+x-Richtung) bewegbar. In z-Richtung weist die Bohrung 17 eine Erstreckung auf, die im Wesentlichen der Erstreckung des Schafts 5b der Schraube 5 in der z-Richtung entspricht (in Fig. 2 nicht gezeigt), um eine Bewegung der Ausrichtungsvorrichtung 13 relativ zum Basisbauteil 7 bzw. zur Werkzeugmaschine 20 in z-Richtung (d.h. parallel zur Referenzgeraden A) zu verhindern. Die Erstreckung der Bohrung 17 in y-Richtung entspricht im Wesentlichen der Erstreckung des Schafts 5b in y-Richtung, wenn die Schraube 5 in dem Basisbauteil 7 verankert ist, um eine Bewegung der Ausrichtungsvorrichtung 13 relativ zum Basisbauteil 7 bzw. zur Werkzeugmaschine 20 in y-Richtung (d.h. parallel zur Bezugsgeraden B) durch den Schraubenkopf 5a zu verhindern. Durch zusätzliches Eindrehen der Schraube 5 kann die Position der Ausrichtungsvorrichtung 13 in Bezug auf das Basisbauteil fixiert, d.h. festgestellt, werden, um eine Bewegung der Ausrichtungsvorrichtung 13 auch in x-Richtung zu verhindern.

Die Exzenterscheibe 2 ist in einer Ebene senkrecht zur Referenzgeraden A (d.h. in einer Ebene parallel zur x-y-Ebene) um eine Exzenterachse (in den Figuren nicht gezeigt) drehbar in dem Gehäuse 15 gelagert. Die Exzenterachse ist parallel zur Referenzgeraden A und verläuft in der im Schnitt dargestellten Ansicht in Fig. 2 durch den Exzentermittelpunkt C15. Eine Drehung der Exzenterscheibe 2 um den Exzentermittelpunkt C15 ist in Fig. 2 durch einen Doppelpfeil III angedeutet.

Optional umfasst die Ausrichtungsvorrichtung 13 ein Lager 3 zum Führen des relativ zur Exzenterscheibe 2 bewegbaren länglichen Elements 4. Das Lager 3 ist vorzugsweise fest an der Exzenterscheibe 2 angebracht, d.h. nicht bewegbar in Bezug auf die Exzenterscheibe 2. Das Lager 3 kann eine Drehbewegung des länglichen Elements 4 um dessen Längsachse L relativ zur Exzenterscheibe 2 und/oder eine Translationsbewegung des länglichen Elements 4 in der Längsrichtung (d.h. in der Erstreckungsrichtung der Längsachse L) ermöglichen. Allgemein kann das Lager 3 eine feste, lose, drehbare oder nicht drehbare Lagerung des länglichen Elements 4 realisieren. Alternativ kann die Ausrichtungsvorrichtung 13 auch ohne ein Lager 3 ausgebildet sein und das längliche Element 4 direkt an der Exzenterscheibe angebracht sein, z.B. durch eine Durchführöffnung der Exzenterscheibe (in den Figuren nicht gezeigt) hindurchgeführt oder in dieser befestigt sein.

Weiter umfasst die Ausrichtungsvorrichtung 13 eine Klemm- oder Rasteinrichtung 6, um ein Klemmen bzw. eine Verrastung der Exzenterscheibe 2 zu bewirken. Durch das Klemmen bzw. die Verrastung der Exzenterscheibe 2 wird eine Rotationsstellung der Exzenterscheibe 2 fixiert, d.h. eine Drehung der Exzenterscheibe 2 verhindert. Wenn die Klemm- oder Rasteinrichtung nicht aktiviert ist, gibt sie eine Drehung der Exzenterscheibe 2 frei. In Fig. 2 ist die Klemm- oder Rasteinrichtung 6 als eine radial um die Exzenterscheibe 2 herum angeordnete Scheibe ausgeführt. Die Klemmung oder Verrastung der Exzenterscheibe durch die Klemm- oder Rasteinrichtung 6 ist jedoch nicht auf eine radiale Fixierung beschränkt, sie kann alternativ oder zusätzlich auch als eine axiale Klemmung oder Verrastung ausgeführt sein.

Das längliche Element 4 ist so an der Exzenterscheibe 2 vorgesehen, dass die Längsachse L des länglichen Elements 4 von der Exzenterachse der Exzenterscheibe (in den Figuren nicht gezeigt) beabstandet ist. In der in Fig. 2 im Schnitt gezeigten Ansicht ist somit der Mittelpunkt C4 des länglichen Elements 4, durch den die Längsachse L verläuft, von dem Exzentermittelpunkt C15 um einen Abstand I beabstandet. Der Abstand I wird auch als Exzentrizität der Exzenterscheibe 2 bezeichnet. Der Abstand I entspricht in Fig. 2 einem Abstand II der Mittelpunkte C4 und C15 in x-Richtung und einem Abstand VI der Mittelpunkte C4 und C15 in y-Richtung (d.h. parallel zur Bezugsgeraden B bzw. in der Einstellrichtung).

Die einzelnen Bauteile bzw. Elemente der Werkzeugmaschine 20 weisen in der Regel Fertigungstoleranzen, d.h. Fehler in ihren Abmessungen bzw. ihren Formen, auf, die z.B. durch eine materialabtragende Herstellung der einzelnen Bauteile bzw. Elemente verursacht werden können. Auch bei der Montage der Werkzeugmaschine können Lage- und Positionstoleranzen auftreten. Diese Toleranzen bewirken in der Regel eine Anordnung des länglichen Elements, die von einer gewünschten Ausrichtung parallel zur Referenzgeraden A (d.h. in z-Richtung) abweicht. Diese Abweichung ist in Fig.1 dadurch dargestellt, dass die Längsachse L des länglichen Elements 4 an der ersten Stelle P1, d. h. bei der Ausrichtungsvorrichtung 13, einen Abstand V zur Basisfläche 7a des Basisbauteils 7 aufweist (vgl. auch Fig. 2) und an der zweiten Stelle P2, d.h. bei der Halterung 11, einen Abstand VII zur Basisfläche 7a des Basisbauteils 7 aufweist (vgl. auch Fig. 3), wobei der Betrag des Abstands VII an der zweiten Stelle P2 vom Betrag des Abstands V an der ersten Stelle P1 abweicht. Somit ergibt sich eine Differenz zwischen diesen beiden Abstandswerten, welche in Fig. 1 als ein Abstand XIV der Längsachse L an der ersten Stelle P1 (d.h. dem Mittelpunkt C4 in Fig. 1, 2) und an der zweiten Stelle P2 (d.h. dem Mittelpunkt C11 in Fig. 1, 3) in Richtung der Bezugsgeraden B (d.h. in y-Richtung) dargestellt ist. Aufgrund der Exzentrizität I der Ausrichtungsvorrichtung 13 kann durch eine Drehung der Exzenterscheibe 2 um ihre Exzenterachse der Abstand V des Mittelpunkts C4 des länglichen Elements 4 zur Basisfläche 7a des Basisbauteils 7 in der Einstellrichtung (d.h. in Richtung der Bezugsgeraden B, also in y-Richtung) eingestellt werden. Somit ermöglicht die Exzenterscheibe 2 eine Höheneinstellung des länglichen Elements 4 an der ersten Stelle P1 in Bezug auf das Basisbauteil 7, wodurch der Abstand XIV angepasst werden kann.

Analog kann die Längsachse L des länglichen Elements 4 in x-Richtung einen Abstand zwischen den Stellen P1 und P2 aufweisen (in den Figuren nicht gezeigt).

Zum Ausrichten des länglichen Elements 4 in der Werkzeugmaschine 20 wird mittels der Ausrichtungsvorrichtung 13 zuerst der Fehler in y-Richtung behoben, d.h. der Abstand XIV der Längsachse L des länglichen Elements 4 zwischen der ersten Stelle P1 und der zweiten Stelle P2 in Richtung der Bezugsgeraden B, d. h. in der Einstellrichtung, auf Null oder nahezu Null eingestellt. Hierzu wird die Exzenterscheibe 2 um den Exzentermittelpunkt C15 gedreht (vgl. Doppelpfeil III in Fig. 2), um den Abstand VI der Mittelpunkte C4 und C15 in der Einstellrichtung (d.h. in y-Richtung) so einzustellen, dass der Abstand V des Mittelpunkts C4 des länglichen Elements 4 von der Basisfläche 7a des Basisbauteils 7 (s. Fig. 1, 2) im Wesentlichen dem Abstand VII des Mittelpunkts C11 des länglichen Elements 4 von der Basisfläche 7a des Basisbauteils 7 (s. Fig. 1, 3) entspricht. Damit ist die Längsachse L parallel bzw. im Wesentlichen parallel zur Basisfläche 7a des Basisbauteils 7 als Referenzfläche ausgerichtet.

Bei dieser Höheneinstellung in Bezug auf die Referenzfläche (Basisfläche 7a) gibt die Klemm- oder Rasteinrichtung 6 die Drehung der Exzenterscheibe 2 frei, d. h. klemmt bzw. verrastet die Exzenterscheibe 2 nicht. Zudem sind die Schrauben 5 nur angestellt, d.h. nicht vollständig festgezogen, um eine Bewegung der Ausrichtungsvorrichtung 13 in x-Richtung zu erlauben (vgl. Doppelpfeil IV in Fig. 2).

Nach dem oben beschriebenen Ausrichten des länglichen Elements 4 in der y-Richtung (Höheneinstellung) wird die entsprechende Rotationsstellung der Exzenterscheibe 2 fixiert, d. h. ein Klemmen bzw. eine Verrastung der Exzenterscheibe 2 durch die Klemm- oder Rasteinrichtung 6 bewirkt.

Anschliessend wird das längliche Element 4 in der x-Richtung ausgerichtet, d.h. im Wesentlichen (also im Rahmen einer vorab festgelegten Parallelitätstoleranz in x-Richtung) parallel zur Referenzgeraden A ausgerichtet. Dies erfolgt beispielsweise durch Bewegen der Ausrichtungsvorrichtung 13 entlang der x-Richtung (vgl. Doppelpfeil IV in Fig. 2). Eine Ausrichtung des länglichen Elements 4 kann beispielsweise anhand der x-Positionen der Längsachse L an den Stellen P1 und P2 (bzw. den Mittelpunkten C4 und C11) erfolgen, oder anhand einer weiteren Referenzebene, die senkrecht zur Basisfläche 7a des Basisbauteils 7 verläuft. Anschliessend werden die Schrauben 5 der Ausrichtungsvorrichtung 13 festgezogen.

Das Ausrichten des länglichen Elements in der y-Richtung und gegebenenfalls in der x-Richtung wird vor Inbetriebnahme der Werkzeugmaschine durchgeführt, insbesondere im Rahmen einer Montage bzw. des Zusammenbaus der Werkzeugmaschine. Das Ausrichten des länglichen Elements kann auch während Betriebsunterbrechungen der Werkzeugmaschine durchgeführt werden, beispielsweise zum Zweck einer Nachjustage.

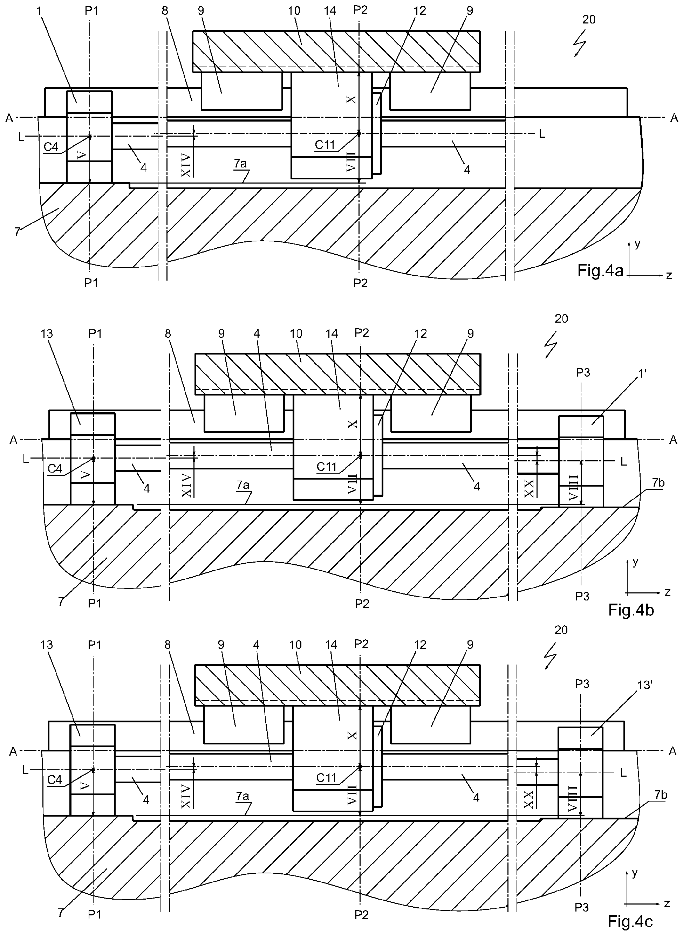

Im Folgenden werden in Bezug auf Fig. 4a bis 4e Weiterbildungen der ersten Ausführungsform der Werkzeugmaschine 20, welche oben in Bezug auf Fig. 1 bis 3 beschrieben wurde, beschrieben. In den Figuren 4a bis 4e sind identische oder im Wesentlichen gleiche Elemente und Bauteile der Werkzeugmaschine 20 mit denselben Bezugszeichen wie in Fig. 1 bis 3 bezeichnet und die Beschreibung dieser Elemente und Bauteile, sowie ihrer Funktion wird im Folgenden nicht wiederholt.

Bei der in Fig. 4a gezeigten ersten Weiterbildung wird das längliche Element 4 an der ersten Stelle P1 in Bezug auf die Längsachse L mittels einer Halterung 1 anstelle einer Ausrichtungsvorrichtung (vgl. Fig. 1) gehalten. Die Halterung 1 ist ähnlich wie die oben beschriebene Halterung 11 ausgebildet, wobei sie jedoch nicht an der Platte 10 (vgl. Fig.1, 3), sondern an dem Basisbauteil 7, beispielsweise an dessen Basisfläche 7a, angebracht ist. Zudem kann die in Fig. 4a gezeigte Halterung 1 im Unterscheid zur oben beschriebenen Halterung 11 ohne den Mitnehmer 12 ausgebildet sein. Beispielsweise kann anstelle des Mitnehmers 12 ein Lager vorgesehen sein, um das längliche Element mit einem oder mehreren Freiheitsgraden (z.B. radial und/oder axial) bewegbar in der Halterung 1 zu halten.

Des Weiteren ist bei der in Fig. 4a gezeigten Werkzeugmaschine 20 an der Stelle P2 anstelle einer Halterung (vgl. Fig. 1) eine Ausrichtungsvorrichtung 14 vorgesehen. Die Ausrichtungsvorrichtung 14 ist im Wesentlichen identisch zu der oben in Bezug auf Fig. 1 und 2 beschriebene Ausrichtungsvorrichtung 13, mit dem Unterschied, dass sie mittels des Befestigungsabschnitts 16 (vgl. Fig. 2) an dem als Platte 10 ausgebildeten Trägerelement angebracht ist. Zudem kann die Ausrichtungsvorrichtung 14 zusätzlich oder alternativ zu einem Lager 3 (vgl. Fig. 2) einen oben in Bezug auf Fig. 1 und 3 beschriebenen Mitnehmer 12 aufweisen.

Bei der in Fig. 4a gezeigten Weiterbildung wird der Abstand VII der Längsachse L des länglichen Elements 4 zur Referenzfläche (Basisfläche 7a) an der Stelle P2 eingestellt, indem ein Abstand X (s. Fig. 4a) der Längsachse L zur Platte 10 durch Drehen der Exzenterscheibe (in Fig. 4a nicht gezeigt) der Ausrichtungsvorrichtung 14 eingestellt wird. Eine etwaige Ausrichtung des länglichen Elements 4 in der x-Richtung kann an der Stelle P2 oder an der Stelle P1 erfolgen.

Gemäss einer in Fig. 4b gezeigten zweiten Weiterbildung der Werkzeugmaschine 20 ist zum Halten des länglichen Elements 4 eine Ausrichtungsvorrichtung 13 (vgl. Fig. 1) an der ersten Stelle P1 und eine weitere Ausrichtungsvorrichtung 14 (vgl. Fig. 4a) an der zweiten Stelle P2 vorgesehen, sowie eine Halterung 1' an einer dritten Stelle P3 entlang der Längsachse L. In Fig. 4b sind die erste Stelle P1 und die dritte Stelle P3 an gegenüberliegenden Endabschnitten des länglichen Elements 4 in Bezug auf die Längsachse L vorgesehen und die zweite Stelle P2 ist an einem Mittelabschnitt des länglichen Elements 4 in Bezug auf die Längsachse L vorgesehen.

Die Halterung 1' kann beispielsweise die Funktion eines Gegenlagers haben. Die Halterung 1' ist analog zu der in Bezug auf Fig. 4a beschriebenen Halterung 1 ausgebildet und ebenfalls an dem Basisbauteil 7, beispielsweise an dessen Basisfläche 7a oder an der Basisfläche 7b, angebracht. An der dritten Stelle P3 hat die Längsachse L des länglichen Elements 4 einen Abstand VIII zur Basisfläche 7a.

Bei der zweiten Weiterbildung gemäss Fig. 4b wird eine Ausrichtung des länglichen Elements 4 durch Einstellen der y-Position der Längsachse L an den Stellen P1 und P2 durch die Ausrichtungsvorrichtungen 13 und 14 durchgeführt. Zusätzlich zur Kompensation des Abstand XIV zwischen der Längsachse an der ersten Stelle P1 und der zweiten Stelle P2 in y-Richtung kann somit ein Abstand XX zwischen der Längsachse an der zweiten Stelle P2 und der dritten Stelle P3 in y-Richtung kompensiert werden. Eine Ausrichtung der länglichen Position 4 in x-Richtung kann wahlweise an den Stellen P1 und/oder P2 und/oder P3 erfolgen.

Bei einer in Fig. 4c gezeigten dritten Weiterbildung der Werkzeugmaschine 20 ist anstelle der in Fig. 4b gezeigten und an der dritten Stelle P3 vorgesehenen Halterung eine weitere Ausrichtungsvorrichtung 13' vorgesehen, mittels der der Abstand VIII der Längsachse L zur Basisfläche 7a, sowie die x-Position der Längsachse L an der Stelle P3 ebenfalls eingestellt werden kann.

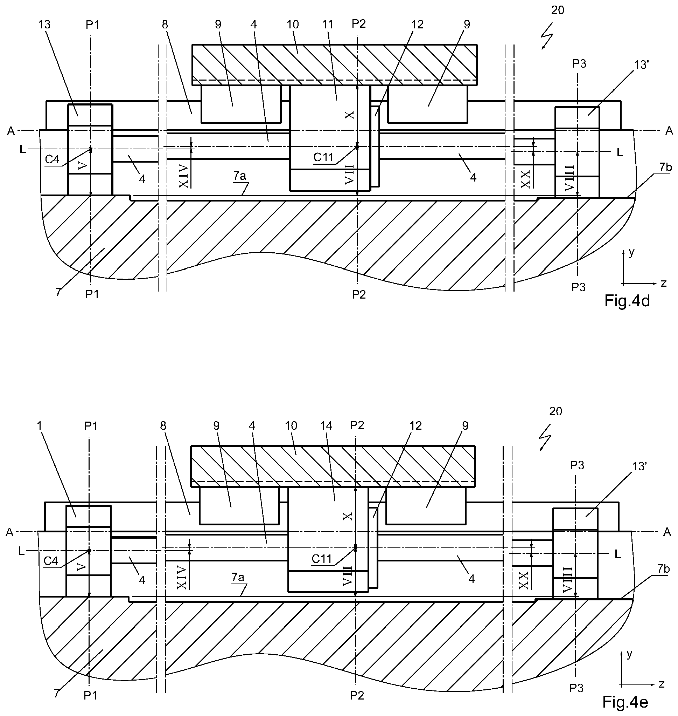

Bei einer in Fig. 4d gezeigten vierten Weiterbildung der Werkzeugmaschine 20 ist anstelle der in Fig. 4c gezeigten und an der zweiten Stelle P2 vorgesehenen Ausrichtungsvorrichtung 14 eine Halterung 11 (vgl. Fig. 1) vorgesehen. Bei einer in Fig. 4e gezeigten fünften Weiterbildung der Werkzeugmaschine 20 sind an der ersten Stelle P1 des länglichen Elements 4 in Bezug auf dessen Längsrichtung eine Halterung 1 vorgesehen (vgl. Fig. 4a), und an der zweiten Stelle P2 ist eine Ausrichtungsvorrichtung 14 vorgesehen und an der dritten Stelle P3 ist ebenfalls eine Ausrichtungsvorrichtung 13' vorgesehen.

Die in Fig. 4a-4e gezeigten Weiterbildungen sind rein beispielhaft zu verstehen, es sind im Rahmen der vorliegenden Anmeldung auch beliebige andere Kombinationen einer oder mehrerer Ausrichtungsvorrichtungen und/oder einer oder mehrere Halterungen an geeigneten Stellen entlang der Längsrichtung des länglichen Elements 4 möglich.

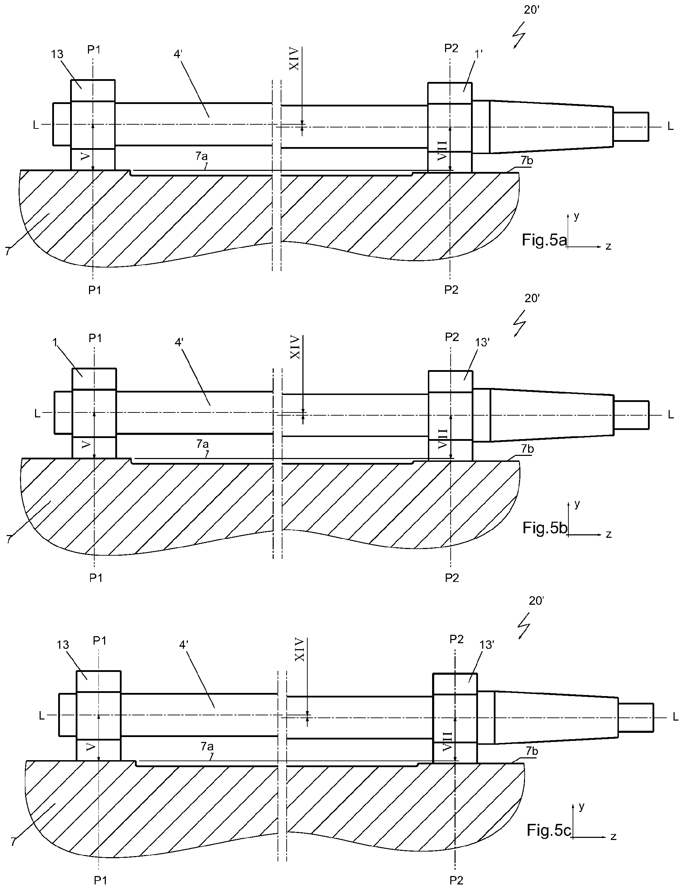

Fig. 5a zeigt eine schematische Ansicht einer Werkzeugmaschine 20' gemäss einer zweiten Ausführungsform der vorliegenden Erfindung. In Fig. 5a sind identische oder im Wesentlichen gleiche Elemente und Bauteile der Werkzeugmaschine 20' mit denselben Bezugszeichen wie die der Werkzeugmaschine 20, die oben in Bezug auf Fig. 1 bis 4c beschrieben wurde, bezeichnet. Die Beschreibung gleichbleibender Elemente und Bauteile, sowie deren Funktion wird im Folgenden nicht wiederholt.

Die Werkzeugmaschine 20' in Fig. 5a umfasst ein längliches Element 4', das beispielsweise als eine Welle ausgebildet ist. Die Werkzeugmaschine 20' ist ohne die oben in Bezug auf die erste Ausführungsform beschriebene Führung 8 mit dem Führungsschlitten 9, das als Platte 10 ausgebildete Trägerelement und die an der Platte 10 vorgesehene Halterung 11 bzw. die entsprechende Ausrichtungsvorrichtung 14 ausgebildet. Das längliche Element 4' wird in Fig. 5a an der ersten Stelle P1 entlang der Längsachse L mittels einer oben beschriebenen Ausrichtungsvorrichtung 13 in der Werkzeugmaschine gehalten und an der zweiten Stelle P2 mittels einer oben beschriebenen Halterung 1'. Der Abstand V der Längsachse L zur Basisfläche 7a des Basisbauteils 7 an der ersten Stelle P1 ist, wie oben beschrieben, mittels der Ausrichtungsvorrichtung 13 einstellbar. Die Position der Längsachse L ist in x-Richtung an der ersten Stelle P1 durch die Ausrichtungsvorrichtung 13 und/oder an der zweiten Stelle P2 durch die Pos1' einstellbar.

Gemäss einer in Fig. 5b gezeigten ersten Weiterbildung der in Fig. 5a gezeigten Werkzeugmaschine 20' ist an der ersten Stelle P1 anstelle der in Fig. 5a gezeigten Ausrichtungsvorrichtung 13 eine oben beschriebene Halterung 1 vorgesehen und an der zweiten Stelle P2 ist anstelle der in Fig. 5a gezeigten Halterung 1' eine oben beschriebene Ausrichtungsvorrichtung 13' vorgesehen, die an der Basisfläche 7b befestigt wird. Damit ist die Position der Längsachse L in der y-Richtung (d.h. der Abstand VII) einstellbar. Die Position der Längsachse L in x-Richtung ist an der ersten Stelle P1 und/oder an der zweiten Stelle P2 einstellbar.

Gemäss einer in Fig. 5c gezeigten zweiten Weiterbildung der Werkzeugmaschine 20' gemäss der zweiten Ausführungsform ist sowohl an der ersten Stelle P1 als auch an der zweiten Stelle P2 jeweils eine oben beschriebene Ausrichtungsvorrichtungen 13 bzw. 13' vorgesehen.

Die in Fig. 5b, 5c gezeigten Weiterbildungen der Werkzeugmaschine 20' sind rein beispielhaft zu verstehen, es können im Rahmen der vorliegenden Anmeldung auch an zusätzlichen Stellen entlang der Längsrichtung des länglichen Elements 4 weitere Halterungen und/oder Ausrichtungsvorrichtungen vorgesehen sein (in den Figuren nicht gezeigt).

Die vorliegende Erfindung ist nicht auf die oben beschriebene Werkzeugmaschine 20, 20' beschränkt. Vielmehr ist die Erfindung in jeder beliebigen Werkzeugmaschine anwendbar, in der ein längliches Element mit einer Längsachse bereitgestellt ist, welches parallel oder im Wesentlichen parallel, insbesondere innerhalb eines vorab festgelegten Toleranzbereichs, zu einer Referenzebene oder einer Referenzgeraden auszurichten ist.

Die Werkzeugmaschine 20 der ersten Ausführungsform kann beispielsweise eine oder mehrere weitere Führungen aufweisen oder die Werkzeugmaschine 20' der zweiten Ausführungsform kann mit einer oder mehreren Führungen ausgestattet sein. Allgemein kann eine derartige Führung (z.B. die in den Figuren 1-4c gezeigte Führung 8) als eine Linearführung oder eine andere geeignete Führung ausgebildet sein.

Bei der Werkzeugmaschine 20 gemäss der ersten Ausführungsform liegt die Referenzgerade A in einer Ebene der Grenzfläche 7a' des Basisbauteils 7, an der die Führung 8 angebracht ist, wobei die Grenzfläche 7a' im Wesentlichen parallel zur als Referenzebene dienenden Basisfläche 7a des Basisbauteils 7 ist. Alternativ kann anstelle der Basisfläche 7a die Grenzfläche 7a' oder eine andere Fläche bzw. Ebene der Werkzeugmaschine 20 als Referenzebene dienen. Eine Referenzebene und/oder eine Referenzgerade können allgemein auch durch andere geeignete Elemente oder Bauteile der Werkzeugmaschine definiert sein als durch die Basisfläche 7a des Basisbauteils 7 bzw. die Führung 8. Auch können die Referenzebene und die Referenzgerade eine virtuelle Ebene bzw. Gerade der Werkzeugmaschine sein.

In der oben beschriebenen Werkzeugmaschine 20, 20' ist das Exzenterelement als eine Exzenterscheibe ausgebildet. Das Exzenterelement kann jedoch auch eine andere Form aufweisen und beispielsweise als eine Exzenterwalze o.ä. ausgebildet sein. Auch muss die Exzenterachse (in den Figuren nicht gezeigt) nicht wie oben beschrieben parallel zur Referenzgeraden sein, sie kann beispielsweise auch quer zur Referenzgeraden verlaufen.

Die Ausrichtungsvorrichtung(en) kann bzw. können integral mit der Werkzeugmaschine 20, 20' bereitgestellt sein oder separat von dieser, z.B. als ein Aus- oder Nachrüstsatz zum Aus- bzw. Nachrüsten der Werkzeugmaschine 20, 20', bereitgestellt sein. Allgemein können eine oder mehrere oben beschriebene Ausrichtungsvorrichtungen 13, 13', 14 jeweils an geeigneter Stelle des länglichen Elements 4, 4' vorgesehen sein. Zusätzlich können eine oder mehrere Halterungen 1, 1', 11 jeweils an geeigneter Stelle des länglichen Elements 4, 4' vorgesehen sein. Die Ausrichtungsvorrichtung(en) kann bzw. können nach dem Ausrichten des länglichen Elements in der Werkzeugmaschine verbleiben. Alternativ kann zumindest eine Ausrichtungsvorrichtung nach dem Ausrichten des länglichen Elements aus der Werkzeugmaschine entnommen werden.

Eine oben beschriebene Halterung oder Ausrichtungsvorrichtung der Werkzeugmaschine 20, 20' ist allgemein zum Halten des länglichen Elements 4, 4' in der Werkzeugmaschine 20, 20' ausgebildet und kann, wie oben beschrieben, ein Lager aufweisen, um eine Bewegung des länglichen Elements relativ zur Halterung oder Ausrichtungsvorrichtung zu ermöglichen. Insbesondere kann ein Lager dazu ausgebildet sein, eine Linearbewegung des länglichen Elements in Richtung der Längsachse L (d.h. in Längsrichtung) und/oder eine Drehbewegung um die Längsachse L zu erlauben.

Das längliche Element ist nicht auf eine Achse oder eine Welle oder eine Führung oder einen Antrieb der Werkzeugmaschine beschränkt. Vielmehr kann das längliche Element auch als ein anderes Element bzw. Bauteil der Werkzeugmaschine ausgebildet sein. Das längliche Element kann auch zumindest ein Abschnitt des mit der Werkzeugmaschine zu bearbeitenden Werkstücks sein.

## Patentansprüche

1. Ausrichtungsvorrichtung zum Ausrichten eines länglichen Elements (4, 4') in einer Werkzeugmaschine (20, 20'), wobei die Werkzeugmaschine zumindest eine Referenzebene (7a, 7a') aufweist und das längliche Element (4, 4') sich im Wesentlichen entlang einer Längsachse (L) erstreckt, wobei die Ausrichtungsvorrichtung (13, 13', 14) umfasst:
einen Befestigungsabschnitt (16) zum Anbringen der Ausrichtungsvorrichtung (13, 13', 14) an der Werkzeugmaschine (20, 20') und
ein Exzenterelement (2), das um eine Exzenterachse drehbar ist und an dem das längliche Element (4, 4') vorgesehen ist, um das längliche Element in der Werkzeugmaschine zu halten,
wobei zumindest in einer Ebene des Exzenterelements (2), die senkrecht zur Exzenterachse verläuft, die Längsachse (L) des länglichen Elements (4, 4') von der Exzenterachse beabstandet ist, sodass eine Drehbewegung (III) des Exzenterelements um die Exzenterachse eine Bewegung des länglichen Elements in einer Einstellrichtung, die quer zur Längsachse (L) ist, bewirkt.

2. Ausrichtungsvorrichtung nach Anspruch 1, wobei das längliche Element (4, 4') eine Achse oder eine Welle oder eine Führung oder ein Antrieb der Werkzeugmaschine ist.

3. Ausrichtungsvorrichtung nach Anspruch 1 oder 2, wobei die Drehbewegung (III) des Exzenterelements (2) um die Exzenterachse eine Bewegung des länglichen Elements (4, 4') in eine Richtung senkrecht zur Referenzebene (7a, 7a') der Werkzeugmaschine bewirkt.

4. Ausrichtungsvorrichtung nach einem der Ansprüche 1 bis 3, wobei der Befestigungsabschnitt (16) dazu ausgebildet ist, eine relative Bewegung der Ausrichtungsvorrichtung (13, 13', 14) zur Werkzeugmaschine (20, 20') in eine Richtung parallel zur Referenzebene (7a, 7a') zu erlauben, und eine relative Bewegung der Ausrichtungsvorrichtung (13, 13', 14) zur Werkzeugmaschine (20, 20') senkrecht zur Referenzebene (7a, 7a') zu verhindern.

5. Ausrichtungsvorrichtung nach einem der Ansprüche 1 bis 4, wobei das Exzenterelement als eine Exzenterscheibe (2) ausgebildet ist, wobei die Exzenterscheibe eine Durchführöffnung aufweist zur Befestigung des länglichen Elements (4, 4') an der Exzenterscheibe (2).

6. Ausrichtungsvorrichtung nach einem der Ansprüche 1 bis 5, wobei das Exzenterelement (2) ein Lager (3) umfasst, das eine Bewegung des länglichen Elements (4, 4') relativ zum Exzenterelement erlaubt.

7. Ausrichtungsvorrichtung nach einem der Ansprüche 1 bis 6, weiter umfassend eine Klemm- oder Rasteinrichtung (6), um eine Rotationsstellung des Exzenterelements um die Exzenterachse zu fixieren oder eine Drehung des Exzenterelements um die Exzenterachse freizugeben.

8. Werkzeugmaschine, umfassend eine Referenzebene (7a, 7a') und ein längliches Element (4, 4'), das sich im Wesentlichen entlang einer Längsachse (L) erstreckt, und zumindest eine Ausrichtungsvorrichtung (13, 13', 14) nach einem der Ansprüche 1 bis 7.

9. Werkzeugmaschine nach Anspruch 8, wobei die Ausrichtungsvorrichtung (13, 13', 14) das längliche Element an einer ersten Stelle (P1, P2, P3) in Bezug auf die Längsachse des länglichen Elements hält und wobei die Werkzeugmaschine weiter eine Halterung (1, 1', 11) oder eine weitere Ausrichtungsvorrichtung (13, 13', 14) nach einem der Ansprüche 1 bis 7 umfasst, die das längliche Element an einer zweiten Stelle (P1, P2, P3) in Bezug auf die Längsachse des länglichen Elements hält, wobei die erste Stelle und die zweite Stelle entlang der Längsachse (L) voneinander beabstandet sind.

10. Werkzeugmaschine nach Anspruch 8 oder 9, wobei zumindest eine Ausrichtungsvorrichtung (13, 13', 14) an einem Endabschnitt oder einem Mittelabschnitt des länglichen Elements (4, 4') in Bezug auf die Längsachse (L) des länglichen Elements vorgesehen ist.

11. Verfahren zum Ausrichten eines länglichen Elements (4, 4') in einer Werkzeugmaschine (20, 20') mittels mindestens einer Ausrichtungsvorrichtung (13, 13', 14) nach einem der Ansprüche 1 bis 7, wobei die Werkzeugmaschine zumindest eine Referenzebene (7a, 7a') aufweist und ein längliches Element umfasst, welches sich im Wesentlichen entlang einer Längsachse (L) erstreckt.

12. Verfahren nach Anspruch 11, wobei das Exzenterelement (2) der mindestens einen Ausrichtungsvorrichtung (13, 13', 14) derart um die Exzenterachse gedreht wird, dass die Längsachse (L) des länglichen Elements im Wesentlichen parallel zur Referenzebene (7a, 7a') ausgerichtet wird.

13. Verfahren nach Anspruch 11 oder 12, wobei die Ausrichtungsvorrichtung (13, 13', 14) parallel zur Referenzebene (7a, 7a') bewegt wird, um die Längsachse (L) des länglichen Elements (4, 4') im Wesentlichen parallel zu einer Referenzgeraden (A) der Werkzeugmaschine auszurichten.
